# FASCICULE DE BREVET EUROPEEN

(11) **EP 0 533 537 B1**
(45) Date de publication et mention de la délivrance du brevet: **02.11.1994**
(21) Numéro de dépôt: 92402477.1
(22) Date de dépôt: 10.09.1992
(51) Int. Cl.: F16D 23/14

(54) **Butée de débrayage pour embrayage du type tiré, notamment pour véhicules automobiles**
Ausrücklager für eine gezogene Kupplung, insbesondere für Kraftfahrzeuge
Release mechanism for a pull-type clutch, especially for automotive vehicles

(30) Priorité: 17.09.1991 FR 9111444
(43) Date de publication de la demande: 24.03.1993
(73) Titulaire: VALEO, 75848 Paris Cédex 17 (FR)
(72) Inventeur: Feigler, Jacques, F-95350 St. Brice s/Forêt (FR)
(74) Mandataire: Gamonal, Didier

(56) Documents cités:
- FR-A- 1 467 848
- FR-A- 2 304 826
- FR-A- 2 350 505

## Description

La présente invention concerne les butées de débrayage pour embrayage du type tiré, notamment pour véhicules automobiles, tel que décrit dans le document US-A-4,405,041.

Dans ce document, la butée comporte un élément de manoeuvre soumis à l'action d'une fourchette de débrayage et un élément d'attaque, appartenant à un boîtier, pour action sur les doigts d'un diaphragme.

Le boîtier est rapporté sur l'extrémité desdits doigts à l'aide d'une pièce d'accostage et comporte à cet effet centralement un élément d'attaque en forme de douille traversant le diaphragme.

La bague externe d'un roulement à billes est fixée au boîtier, tandis que la bague interne de ce roulement est conformée pour être reliée de manière connectable et déconnectable à une fourchette de débrayage par l'intermédiaire de l'élément de manoeuvre mobile à translation le long d'un tube-guide.

Cet élément de manoeuvre comporte des doigts de crochetage pivotants. Ainsi il est créé un montage de butée de débrayage avec une butée de débrayage pourvue d'un boîtier appartenant à un bloc primaire comprenant l'embrayage et un élément de manoeuvre appartenant à un bloc secondaire comprenant la boîte de vitesses avec son arbre d'entrée.

Il résulte de cette construction que le roulement à billes et l'élément de manoeuvre sont relativement compliqués, et que les doigts de crochetage peuvent perturber le mouvement de coulissement de l'élément de manoeuvre le long de son tube-guide.

De plus, la butée étant portée en majeure partie par le dispositif débrayeur de l'embrayage, il en résulte qu'il faut, lors de l'assemblage du montage de butée de débrayage par encliquetage, effectuer un grand déplacement relatif du bloc secondaire par rapport au bloc primaire pour enfiler l'arbre d'entrée de la boîte de vitesses.

En outre, avant assemblage, le roulement et son boîtier peuvent être endommagés suite à de mauvaises manipulations.

La présente invention a pour objet de pallier de manière simple et économique ces inconvénients tout en continuant à bénéficier d'un montage de butée de débrayage encliquetable à boîtier.

Suivant l'invention, une butée de débrayage du type sus-indiquée, dans laquelle des moyens d'assujettissement interviennent entre le roulement à billes et l'élément de manoeuvre pour assujettir axialement la bague interne dudit roulement à l'élément de manoeuvre et assurer une liaison axiale entre ledit roulement et ledit élément de manoeuvre allant de la pièce d'attaque à l'élément de manoeuvre, est caractérisée en ce que, en combinaison
a) le boîtier, le roulement à billes et l'élément de manoeuvre de la butée de débrayage appartiennent au bloc secondaire
b) le boîtier de la butée de débrayage est conformé pour présenter un élément d'attaque pourvu d'un évidement d'engagement, pour réception d'un organe de couplage élastiquement déformable porté par une pièce d'accostage
c) l'élément de manoeuvre est globalement de forme tubulaire

Ainsi il est créé une butée de débrayage économique grâce notamment à son roulement à billes qui peut être du type standard et à son manchon simplifié. La pièce d'accostage est également simple en étant dépourvue de roulement à billes.

On appréciera que la taille radiale du roulement de la butée peut être diminuée, l'élément de manoeuvre étant moins encombrant radialement que les doigts de crochetage de l'art antérieur. En outre le boîtier masque le roulement à billes et protège donc celui-ci.

Dans une variante, de manière économique, le boîtier peut constituer par lui-même la bague externe du roulement à billes. Dans ce cas, la taille radiale de la butée peut être encore diminuée.

En outre, on réduit le mouvement à effectuer, pour rapprocher le bloc primaire du bloc secondaire et assurer un assemblage par simple encliquetage de la butée avec sa pièce d'accostage.

Grâce à l'invention il n'est pas besoin de prévoir des doigts pivotants au niveau de l'élément de manoeuvre et la butée de débrayage n'est pas accrochée au dispositif débrayeur de l'embrayage, en sorte que celle-ci ne risque pas d'être endommagée suite à de mauvaises manipulations de l'embrayage avant assemblage du montage de butée de débrayage.

En outre le boîtier est moins massif et peut se monter sur une pièce d'accostage standard. Ce boîtier, avantageusement en tôle emboutie, peut servir d'appui à la fourchette de débrayage lors de l'assemblage du montage de butée de débrayage.

La bague interne du roulement est simplifiée et il est également possible de créer une butée de débrayage du type butée auto-centreuse, les moyens d'assujettissement comportant alors un élément élastique prenant appui sur l'élément de manoeuvre pour solliciter la bague interne du roulement à billes en direction d'un épaulement porté par ledit élément de manoeuvre, un jeu radial existant entre la bague interne du roulement à billes et l'élément de manoeuvre.

L'élément de manoeuvre peut porter intérieurement une bague de coulissement facilitant son déplacement le long d'un guide solidaire du bloc secondaire.

La description en annexe illustre, à titre d'exemple, l'invention en référence aux dessins annexés dans lesquels :
- la figure 1 est une demi-vue en coupe axiale d'une butée de débrayage selon l'invention ;
- la figure 2 est une vue en bout de la pièce d'accostage avec en pointillés une partie de la butée ;
- la figure 3 est une vue partielle selon la flèche F1 de la figure 2 ;
- la figure 4 est une vue analogue à la figure 1 pour une autre variante de réalisation.

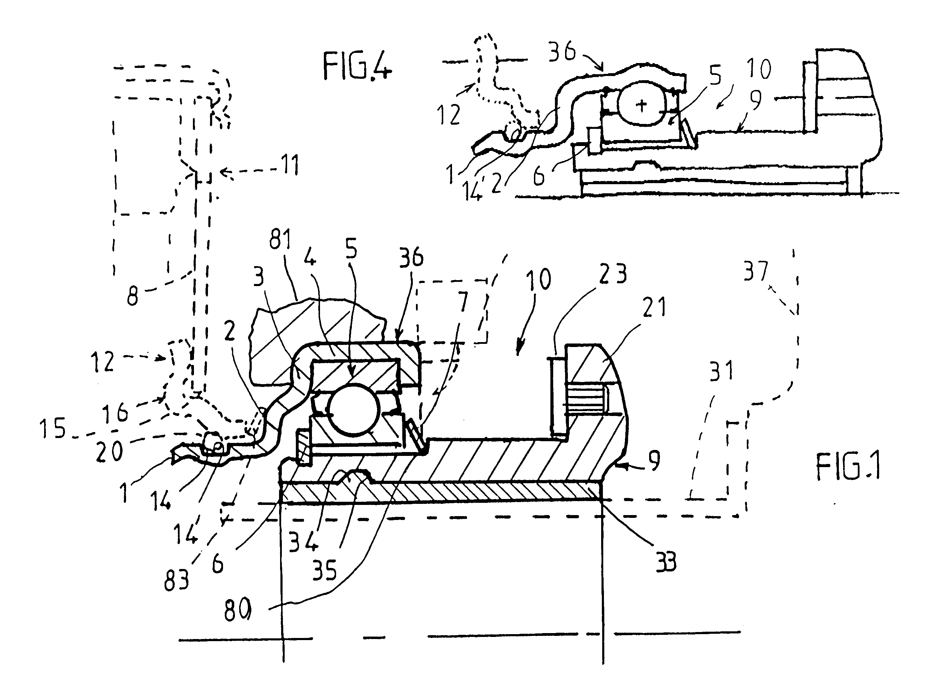

Dans la figure 1, on voit schématiquement en 12 un ensemble d'accostage appartenant à un bloc primaire comportant un embrayage du type tiré, ledit ensemble d'accostage 12 comportant une pièce d'accostage 16 convenablement rapportée sur le dispositif débrayeur 11, que comporte l'embrayage, tandis que l'on voit en 10 une butée de débrayage appartenant à un bloc secondaire comportant la boîte de vitesses. La butée 10 et la pièce d'accostage 16 sont de forme annulaire.

Pour mémoire on rappellera, comme notamment visible dans le susmentionné document US-A-4,405,041, qu'un embrayage du type tiré comporte un ensemble de pièces annulaires, à savoir, un disque de friction, un plateau de réaction, un plateau de pression (schématisé à la figure 1), un couvercle creux (schématisé à la figure 1) et des moyens élastiques à action axiale 11.

Ici ces moyens 11 consistent en un diaphragme 11 comportant une partie périphérique formant rondelle Belleville se raccordant à une partie centrale fragmentée en doigts radiaux 8 par des fentes.

Les doigts 8 appartiennent au dispositif débrayeur de l'embrayage. En variante, les moyens élastiques peuvent consister en une pluralité de ressorts à boudin manoeuvrés par des leviers de débrayage appartenant au dispositif débrayeur de l'embrayage.

Le diaphragme 11 prend appui sur le couvercle pour solliciter le plateau de pression vers le plateau de réaction et serrer les garnitures de frottement, que comporte usuellement le disque de friction, entre lesdits plateaux.

Pour désengager l'embrayage il faut donc agir en traction sur l'extrémité interne des doigts du diaphragme 11 pour faire basculer celui-ci et faire cesser l'action de serrage exercée sur le plateau de pression afin de libérer le disque de friction.

Cette manoeuvre de l'embrayage s'effectue à l'aide d'un montage de butée de débrayage, comportant pour l'attelage de la butée de débrayage 10 au dispositif débrayeur 11 de l'embrayage, la pièce d'accostage 16, qui est convenablement rapportée sur ledit dispositif débrayeur 11, et ici des moyens de solidarisation en traction, qui, établit entre la pièce d'accostage 16 et une pièce d'attaque 1 appartenant à ladite butée de débrayage 10, sont propres à assurer une liaison axiale entre lesdites pièces d'accostage et d'attaque, allant dudit dispositif débrayeur à la butée de débrayage.

Ces moyens de solidarisation en traction comportent, d'une part, un organe de couplage 20 élastiquement déformable radialement, qui est, au moins partiellement engagé dans un évidement de dilatation 130 ménagé pour lui sur la pièce d'accostage 16, en faisant saillie radialement vis-à-vis de ladite pièce, à l'état libre, et, d'autre part, une portée d'entraînement 14 qui est ménagée à la faveur d'un évidement d'engagement 14′ pratiqué sur la pièce d'accostage et avec laquelle ledit organe de couplage 20 coopère axialement en appui dans le sens axial considéré.

Pour assemblage du montage de butée de débrayage il faut donc rapprocher axialement les blocs primaire et secondaire (donc rapprocher le moteur par rapport à la boîte de vitesses) pour pénétration de l'arbre d'entrée de ladite boîte de vitesses dans la pièce d'accostage 16 et encliquetage de la pièce d'accostage 16 avec la butée de débrayage, de manière décrite ci-après, grâce à l'organe de couplage 20 aux évidements d'engagement 14′ et de dilatation 130 et à la portée d'entraînement 14.

Ici la butée 10 comporte un boîtier 36 creux annulaire, un roulement à billes 5, un élément de manoeuvre 9 propre à être soumis à l'action d'un organe de commande tel qu'une fourchette de débrayage sur un piston d'une commande hydraulique.

Le boîtier 36 porte l'élément d'attaque 1 et est solidaire de la bague externe tournante du roulement à billes 5.

L'élément de manoeuvre 9 est adapté à coulisser le long d'un tube-guide 31 solidaire du carter de la boîte de vitesses (représenté schématiquement en 37) et du bloc secondaire.

Suivant l'invention, une butée de débrayage 10 du type sus-indiquée est caractérisée en ce que, en combinaison
a) le boîtier 36, le roulement à billes 5 et l'élément de manoeuvre 9 de la butée de débrayage 10 appartiennent au bloc secondaire
b) le boîtier 36 de la butée de débrayage 10 est conformé pour présenter l'élément d'attaque 1 pourvu de l'évidement d'engagement 14′, pour réception de l'organe de couplage élastiquement déformable radialement 20 porté par la pièce d'accostage 16 et le bloc primaire
c) l'élément de manoeuvre 9 est globalement de forme tubulaire.

A la figure 1 le roulement 5 est un roulement du type standard. Des moyens d'assujettissement 6,7,80 interviennent entre le roulement à billes 5 et l'élément de manoeuvre 9 pour assujettir axialement la bague interne non tournante dudit roulement 5 à l'élément de manoeuvre 9 tubulaire et assurer une liaison axiale entre ledit roulement et ledit élément de manoeuvre allant de la pièce d'attaque 1 à l'élément de manoeuvre 9.

Ici le boîtier 36 est en tôle emboutie en étant de forme annulaire, il comporte une jupe 4, d'orientation axiale, entourant sans jeu la bague externe du roulement à billes 5. La jupe 4 se prolonge à l'une de ses extrémité par un bord tombé 3 dirigé radialement vers l'axe de l'ensemble, ledit bord tombé étant prolongé vers l'axe de l'ensemble par une portion de raccordement 2 de forme tortueuse et inclinée, laquelle se raccorde à une portion cylindrique globalement en forme de douille 1 constituant l'élément d'attaque selon l'invention.

Cet élément d'attaque pénètre à l'intérieur de la pièce d'accostage, plus particulièrement à l'intérieur de la douille 18 de celle-ci décrite ci-après.

C'est dans cette douille qu'est pratiqué, ici par emboutissage, l'évidement d'engagement 14′ pour l'organe de couplage 20 ici sous forme d'un jonc. Cet évidement consiste en une gorge dont l'un des flancs 14 constitue la portée d'entraînement, à savoir, celui le plus éloigné du roulement 5 et le plus proche de l'extrémité libre de la douille 1, chanfreiné pour faciliter la pénétration de l'élément d'attaque 1 à l'intérieur du jonc 20 de manière décrite ci-après.

L'autre extrémité de la jupe 4, initialement droite (figure 1), est rabattue radialement vers l'intérieur pour emprisonner la bague externe du roulement 5, ce qui permet de réduire l'épaisseur du boîtier 36.

Cette extrémité rabattue permet la formation d'un appui pour la fourchette de débrayage (non visible) lors de l'assemblage par encliquetage du montage de butée de débrayage.

Ainsi cette bague externe est fixée au boîtier 36 par sertissage, ladite bague étant emprisonnée par le bord tombé 3, la jupe 4 et l'autre extrémité de la jupe rabattue.

Bien entendu au lieu de rabattre l'extrémité de la jupe, on peut caler axialement la bague externe du roulement 5 à l'aide d'un circlips comme décrit dans le susmentionné document US-A-4,405,041.

L'élément de manoeuvre a globalement la forme d'un manchon et présente transversalement à l'une de ses extrémités au moins deux pattes 21 pour montage de pions 23 durcis servant à l'appui des doigts d'une fourchette de débrayage de manière connue en soi.

Cette fourchette peut être attelée aux pattes 21, par exemple par des ressorts, pour permettre l'assemblage du montage de butée de débrayage.

A sa périphérie interne le manchon 9, ici en fonte, porte une bague de coulissement 33 en matériau anti-friction, par exemple en matière plastique, pour un bon coulissement le long du guide 31.

Cette bague 33 est solidarisée au manchon 9 par engagement à force, ladite bague présentant une nervure 34 engagée dans une gorge globalement trapézoïdale 35, que présente intérieurement l'alésage interne du manchon 9.

A sa périphérie externe, ce manchon 9 porte deux épaulements 6,80 décalés axialement l'un par rapport à l'autre pour montage de la bague interne du roulement 5. Plus précisément le manchon 9 présente un changement de diamètre pour formation d'un épaulement 80.

Ce changement de diamètre affecte le manchon 9 au niveau de son extrémité libre opposée à celle comportant les pattes 21. Cette extrémité libre présente une gorge pour montage d'un circlips 6.

Ce circlips 6 est monté à la faveur de la portion de raccordement 2, dégageant un volume pour montage dudit circlips au bénéfice de la compacité de la butée.

On notera que la douille 1 s'étend radialement en dessous de la bague interne du roulement 5. Le boîtier 36, grâce à sa portion de raccordement 2, masque le roulement 5 et protège donc celui-ci. Le décalage axial entre la jupe 4 et la douille 1 est tel qu'aucune interférence n'est à craindre entre la douille et l'extrémité libre du manchond 9.

Ainsi il est formé, entre l'épaulement 80 et le circlips 6, formant épaulement, une gorge. Cette gorge permet le montage de la bague interne du roulement 5. Un moyen élastique à action axiale 7, ici une rondelle Belleville, en variante une rondelle ondulée, s'appuie sur l'épaulement 80 et sur l'une des tranches de la bague interne du roulement 5, pour solliciter l'autre tranche de la bague interne au contact du circlips 6.

La bague interne du roulement 5 est montée à jeu radial par rapport au manchon 9 et peut se déplacer radialement avec le boîtier 36 par rapport au manchon 9 sous le contrôle de la rondelle Belleville 7.

Ainsi il est créé une butée de débrayage du type auto-centreuse avec assujettissement axial du roulement 5 au manchon 9. Lors du désengagement de l'embrayage, l'effort de traction exercé sur les pattes 21 est transmis au circlips 6 au roulement 5 et du roulement 5 à l'élément d'attaque 1 et à l'ensemble d'accostage 12.

On notera que la fixation du boîtier 36 à la bague externe du roulement 5 est aisée et l'on voit à la figure 1 les outils notamment l'un 81 pour venir en prise avec le bord tombé 3 et la jupe 4 et l'autre 82 pour sertissage de l'extrémité de la jupe 4 initialement droite.

En variante (figure 4) le boîtier 36 peut être conformé pour former lui-même la bague externe du roulement à billes, ce qui permet de réduire la taille radiale de la butée.

Dans ce cas, le boîtier ne présente pas de bord tombé, sa portion de raccordement 2 permettant le logement du circlips 6 comme précédemment. Pour ce faire le décalage axial entre la bague externe et la douille 1 est réalisé en prolongeant axialement ladite bague, la portion 2 étant transversale.

L'élément d'attaque 1 de cette butée 10 est propre à être monté par encliquetage sur l'ensemble d'accostage 12.

Cet ensemble d'accostage 12 comporte une pièce d'accostage 16 avec une collerette 17 de forme cintrée, pour appui sur l'extrémité des doigts 8 du diaphragme 11, sur la face de ceux-ci tournée à l'opposé du roulement 5. Cette collerette 17 se raccorde à une douille 18.

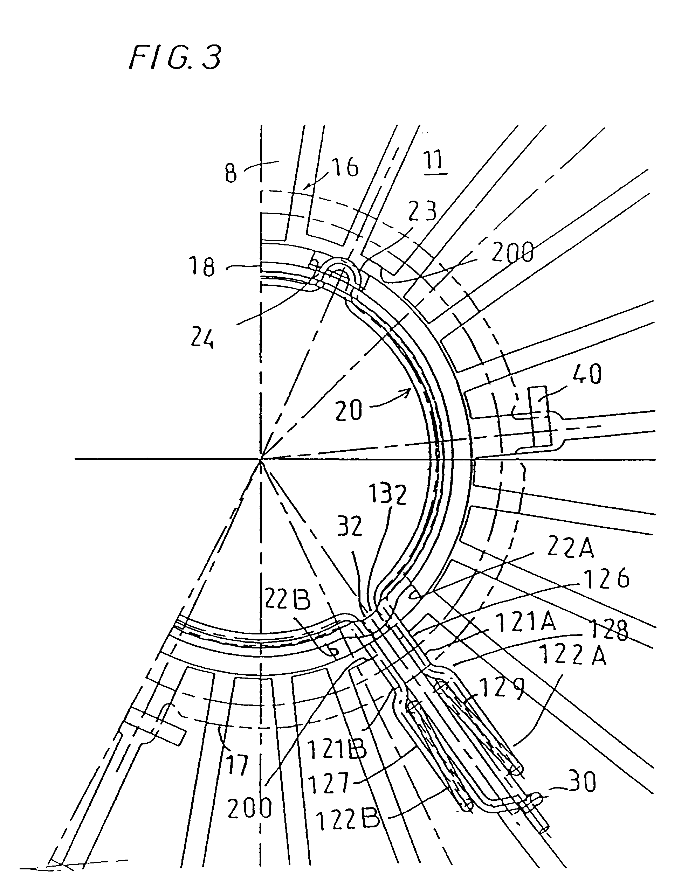

S'agissant du diaphragme 11 on notera que sa partie centrale est formée de doigts radiaux 8 séparés par des fentes (figure 3) et que axialement celui-ci présente une ouverture centrale 15 propre à être traversée par la douille 18. La pièce d'accostage 16 est ici en tôle emboutie.

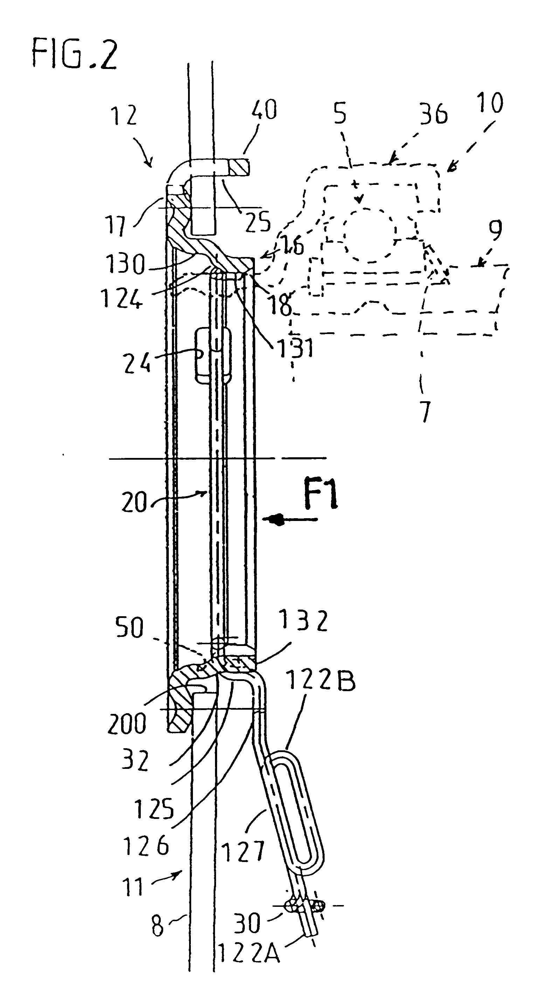

Dans les figures 2 et 3 pour maintien de l'ensemble d'accostage 12, mis en oeuvre pour l'action en traction de la butée de débrayage 10 sur le diaphragme 11 d'un embrayage, la collerette 17 de la pièce d'accostage 16 présente, de place en place à sa périphérie externe, des doigts 25, qui, dirigés axialement dans le même sens que la douille 18 de la pièce d'accostage, traversent le diaphragme 11, à la faveur, chacun respectivement d'une fente séparant les doigts de celui-ci et qui, chacun, porte circonférentiellement en porte-à-faux au droit de la collerette d'appui 17, et globalement parallèlement à celle-ci, des doigts de retenue 40 propre à assurer, en coopération avec cette collerette 17, le maintien axial de l'ensemble sur le diaphragme.

En variante, l'extrémité des doigts 25 peut présenter une gorge pour montage d'une rondelle Belleville, dont l'extrémité interne vient s'appuyer sur les doigts 8 du diaphragme 11.

La pièce d'accostage 16 est alors rapportée par pinçage sur les doigts 8. Bien entendu on peut prévoir d'autres dispositifs pour assujettir la pièce d'accostage aux doigts du diaphragme.

Le jonc de couplage 20 radialement élastiquement déformable s'étend dans un plan sensiblement perpendiculairement à l'axe de l'ensemble et est en fil rond. Il est ouvert et présente deux brins 121A,121B, qui traversent chacun la douille 18 à la faveur de deux évidements 22A,22B distincts de celle-ci, à raison d'un évidement par brins, et s'étendent à l'extérieur de la douille 18.

La partie de la douille 18, qui comporte les évidements 22A,22B de passage des brins 121A,121B, est déformée au moins en partie radialement en direction opposée à l'axe de l'ensemble, suivant un bombé concave 132 vers l'axe de l'ensemble.

C'est le pont 32 séparant les évidements 22A-22B qui est déformé localement radialement en direction opposée à l'axe de l'ensemble, ledit pont ayant en partie une forme incurvée.

Plus précisément la douille 18 comporte, outre un tronçon tronconique 124, offrant intérieurement une portée tronconique, deux parties cylindriques 130,131 s'étendant de part et d'autre dudit tronçon 124.

La partie 130, constitue l'évidement de dilatation selon l'invention. Elle présente un plus grand diamètre et se raccorde par un coude à la collerette 17, tandis que la partie 131, forme l'extrémité libre de la douille 18, en étant chanfreinée et de plus petit diamètre.

Le bombé local 132 affecte en partie le pont 32, ainsi que la totalité de la partie 131 dans l'alignement axial du pont 32.

Le jonc 20 comporte au moins une patte supplémentaire 23, qui, s'étendant radialement est elle-même en prise avec un évidement 24 de la douille 18 plus large axialement.

Ici deux pattes radiales supplémentaires 23, en forme de déformation en demi-onde, et deux évidements 24 sont prévus, chacun globalement à 120° par rapport aux évidements 22A,22B ; lesdites pattes 23 n'étant en contact qu'avec l'un des bords latéraux ou circonférentiels des évidements 24, pour favoriser l'expansion du jonc 20 lors de l'encliquetage de la butée 10.

Pour amélioration de l'élasticité du jonc 20 ouvert, les deux brins 121A,121B sont dotés chacun d'une déformation 122A,122B allongeant leur longueur, de manière élastique.

Ces déformations consistent ici en des boucles 122A,122B. Lesdites boucles forment chacune une boucle du type ressort de traction, et s'étendent après montage, radialement au-dessus de la butée.

Ces boucles permettent de diminuer la rigidité du jonc, ce qui facilite le montage par clipsage, ainsi que la préhension.

Plus précisément à l'extérieur de la douille 18 les brins 121A,121B présentent, en deçà des boucles 122A,122B, deux coudes dont il résulte que, décalés axialement par rapport au jonc 20, leurs extrémités s'étendent conjointement dans un plan parallèle audit jonc entre la butée 10 et le diaphragme 11.

L'extrémité du brin 121B forme obliquement un crochet 30 propre à son crochetage élastique sur la partie courante du brin 121A.

Chacun des brins 121A,121B, après la traversée des évidements 22A,22B, présente une portion d'orientation axiale 125 au contact, avant montage de la butée, de la surface externe de la douille 18, et plus précisément de la partie 131, ladite portion se prolongeant par une première portion radiale 126, puis par une deuxième portion radiale inclinée 127 dans le plan de la figure 4 et comprenant la boucle selon l'invention.

Les portions 126 sont plus rapprochées que les portions 127 et permettent le basculement du diaphragme 11.

Un pli 128 en forme de S relie les deux dites portions 126,127 qui sont parallèles entre elles d'un brin 121A à l'autre brin 121B.

La portion 127 comprend deux parties radiales décalées axialement et parallèles entre elles, lesdites parties étant reliées par la partie inclinée 129 d'une boucle 122A,122B. Ainsi ladite partie inclinée 129 forme globalement une spire d'un ressort hélicoïdal et lesdites boucles constituent un ressort du type ressort "pince à linge". Les boucles constituent donc un enroulement.

Ainsi qu'on l'aura compris les plis 128 permettent le logement des boucles.

Le diaphragme présente un dégagement 200 en regard des évidements 22A,22B pour faciliter le montage du jonc 20.

Pour des raisons de symétrie, deux autres dégagements sont prévus au niveau des pattes 23.

Pour constitution dudit dégagement 200, les deux doigts 8 concernés du diaphragme sont rognés à leur périphérie interne.

Grâce à ceci on est sûr lors du montage de la butée 10, le jonc 20 venant alors en appui contre le fond axial des évidements 22A,22B, que l'appui sur ledit fond se fait en dehors du rayon de courbure du jonc 20 reliant la portion 125 à la partie courante de celui-ci.

Le dégagement 200 permet alors le passage de la portion 125, l'expansion du jonc 20, favorisée par les boucles selon l'invention, se faisant de manière satisfaisante par appui sur ledit fond, le bombé 132 permettant un prépositionnement du jonc.

Pour mémoire on signalera que, dans la configuration libre du jonc 20, les brins 121A,121B s'écartent l'un de l'autre, cependant que le diamètre du jonc s'accroît.

Pour assemblage du montage de butée de débrayage, on rapproche la boîte de vitesses par rapport au bloc moteur avec son diaphragme 11 équipé de l'ensemble d'accostage 12.

Lors de cette opération le jonc 20 est avantageusement en configuration libre.

Lors de ce rapprochement, par exemple par appui de la fourchette de débrayage sur l'extrémité rabattue de la jupe 4, l'extrémité libre chanfreinée de l'élément d'attaque 1 est admise à pénétrer à l'intérieur du jonc 20 et de la douille 18 pour un montage sans effort par encliquetage de la butée 10 sur le jonc.

Après ce rapprochement, on procède au crochetage des brins du jonc.

Ainsi après montage de la butée 10 par encliquetage sur le jonc 20 et crochetage élastique des brins 121A,121B, lesdits brins sont admis à porter circonférentiellement latéralement sur le pont 32.

Le jonc 20 est coincé entre la portée d'entraînement 14 de la pièce d'attaque et le tronçon tronconique 124 de la pièce d'accostage. Les efforts de débrayage transitent ainsi par le jonc 20.

Pour le démontage il suffit de décrocheter les brins 121A,121B du jonc 20, celui-ci passant alors de sa position de contrainte (position refermée) à sa position libre.

Bien entendu la présente invention n'est pas limitée aux exemples de réalisation décrits. En particulier au lieu de pattes 21, le manchon 9 peut être doté d'une collerette transversale et être soumis, par exemple, à l'action d'au moins un piston mobile par rapport à un cylindre avec définition d'une chambre de commande entre lesdites pièces.

Le cylindre est fixe et le piston constituent dans ce cas les moyens de commande pour, comme la fourchette de débrayage, manoeuvrer le manchon 9 et déplacer celui-ci le long du tube-guide 31 afin d'effectuer par traction une manoeuvre de l'embrayage.

Bien entendu, au lieu d'un circlips 6, on peut prévoir toute autre forme d'épaulement, par exemple un épaulement venu du manchon 9 et obtenu par sertissage.

L'épaulement 80 peut consister en un circlips comme l'autre épaulement 6, le changement de diamètre n'étant alors pas obligatoire.

Dans tous les cas la portion de raccordement 2 du boîtier 36 permet de créer un décalage axial entre le roulement 5 et l'élément d'attaque 1 pour dégager un volume afin de réaliser le montage et logement de l'épaulement 6 tel que le circlips 6.

Lorsque les efforts à transmettre sont moins importants, le manchon 9, au lieu d'être en fonte, peut être en tôle emboutie. La liaison axiale manchon 9 - roulement 5 peut être du type non auto-centreuse. Dans ce cas, le roulement est monté sans jeu sur le manchon en étant immobilisé axialement entre les épaulements 6,80.

Dans tous les cas, la butée se monte en aveugle, par simple encliquetage, sur une pièce d'accostage simplifiée, grâce à son évidement d'engagement, et est elle-même économique.

En effet son boîtier, en tôle emboutie et peu massif, est solidaire de la bague externe d'un roulement à billes standard, dont la bague interne est assujettie axialement à un manchon épaulé, propre à porter une bague de coulissement.

On appréciera que la gorge d'engagement 14′ est aisément réalisable dans tous les cas par emboutissage. En variante la gorge 14′ peut être réalisée par tournage.

On peut même utiliser la portion de raccordement 2 du boîtier 36 pour interposer entre celle-ci et l'extrémité libre de la douille 18 une rondelle élastique à action axiale 83, telle qu'une rondelle Belleville ou ondulée. Dans toutes les figures illustrées, la périphérie interne de la portion de raccordement est conformée pour former un épaulement pour la rondelle 83. Ainsi le jonc 20 est constamment coincé entre la portée d'entraînement 14 et la portée tronconique 124.

On obtient donc un fonctionnement irréprochable du montage de butée de débrayage.

La pièce d'accostage peut être massive et porter intérieurement un anneau ouvert élastiquement déformable radialement, ledit anneau étant engagé dans une gorge de dilatation pratiquée dans l'alésage interne de la pièce d'accostage et étant propre à pénétrer dans la gorge d'engagement 14′ de l'élément d'attaque 1.

Comme décrit dans le document FR-91 13 477, figures 1 et 4, l'élément de manoeuvre peut être le piston d'une commande hydraulique.

Dans ce cas l'extrémité dorsale de cet élément de manoeuvre comporte, d'une part, un rebord dorsal radial dirigé vers l'intérieur et, d'autre part, est monté coulissant sur un cylindre dont l'extrémité frontale présente un rebord frontal dirigé vers l'intérieur. Une chambre de commande est ainsi définie entre lesdits rebords dorsal et frontal avec des joints d'étanchéité montés dans lesdits rebords et une alimentation implantée dans l'élément de manoeuvre pour alimentation de la chambre de commande.

Une cale amovible peut être implantée entre l'extrémité dorsale de l'élément et le carter de la boîte de vitesses pour maintenir le piston en position rétractée et faciliter l'assemblage de la pièce d'accostage avec la butée.

Dans tous les cas l'élément de manoeuvre a globalement une forme tubulaire avec un rebord s'étendant radialement vers l'extérieur ou l'intérieur.

## Revendications

1. Butée de débrayage pour embrayage du type tiré, notamment pour véhicules automobiles, comportant un boîtier (36), de forme annulaire, portant un élément d'attaque (1), pour coopération avec un ensemble d'accostage (12) appartenant à un bloc primaire et formation d'un montage de butée de débrayage, un roulement à billes (5) dont la bague externe est solidaire du boîtier, un élément de manoeuvre (9) propre à être soumis à l'action d'un organe de commande et appartenant à un bloc secondaire, dans laquelle des moyens d'assujettissement (6,7,80) interviennent entre la bague interne du roulement à billes (5) et l'élément de manoeuvre (9) pour assujettir axialement ledit roulement à l'élément de manoeuvre et assurer une liaison axiale entre ledit roulement et ledit élément de manoeuvre allant de l'élément d'attaque (1) à l'élément de manoeuvre (9), caractérisée en ce que, en combinaison
a) le boîtier (36), le roulement à billes (5) et l'élément de manoeuvre (9) de la butée de débrayage (10) appartiennent au bloc secondaire
b) le boîtier (36) de la butée de débrayage (10) est conformé pour présenter un élément d'attaque (1) pourvu d'un évidement d'engagement (14′), pour réception d'un organe de couplage élastiquement déformable (20) porté par une pièce d'accostage (16) appartenant à l'ensemble d'accostage (12)
c) l'élément de manoeuvre (9) est globalement de forme tubulaire.

2. Butée de débrayage selon la revendication 1, caractérisée en ce que l'élément de manoeuvre (9) consiste globalement en un manchon portant deux épaulements (6,80) décalés axialement l'un par rapport à l'autre pour montage de la bague interne du roulement à billes (5).

3. Butée de débrayage selon la revendication 2, caractérisée en ce que ledit manchon (9) présente un changement de diamètre pour formation de l'un desdits épaulements (80), dit premier épaulement.

4. Butée de débrayage selon la revendication 3, caractérisée en ce que lesdits moyens d'assujettissement comportent un moyen élastique à action axial (7) prenant appui sur ledit premier épaulement (80) pour solliciter la bague interne du roulement (5) en direction de l'autre épaulement (6), dit second épaulement, porté par ledit manchon (9), et en ce que la bague interne du roulement à billes (5) est montée radialement avec jeu par rapport audit manchon (9).

5. Butée de débrayage selon l'une quelconque des revendications 2 à 4, caractérisée en ce que le manchon (9) porte intérieurement une bague (33) de coulissement.

6. Butée de débrayage selon l'une quelconque des revendications 2 à 5, dans laquelle le boîtier (36) présente une portion (4) solidaire de la bague externe du roulement à billes (5) et prolongée vers l'axe de l'ensemble par au moins une portion de raccordement, laquelle se raccorde à une portion cylindrique en forme de douille (1), caractérisée en ce que le boîtier (36) est agencé en sorte que sa portion de raccordement (2) dégage un volume, avec décalage axial entre l'élément d'attaque (1) et ledit roulement à billes (5), pour logement de l'épaulement (6) concerné porté par le manchon (9) pour montage de la bague interne du roulement à billes (5).

7. Butée de débrayage selon la revendication 6, caractérisée en ce que la portion de raccordement (2) a une forme tortueuse et inclinée pour montage dudit épaulement (6).

8. Butée de débrayage selon l'une quelconque des revendications 1 à 7, dans laquelle le boîtier (36) présente une portion (4) solidaire de la bague externe du roulement à billes (5) et prolongée vers l'axe de l'ensemble par au moins une portion de raccordement, laquelle se raccorde à une portion cylindrique en forme de douille (1), caractérisée en ce que ledit évidement d'engagement (14′) est pratiqué dans ladite douille (1) propre à pénéter à l'intérieur de ladite pièce d'accostage (16).

9. Butée de débrayage selon la revendication 8, dans laquelle l'évidement d'engagement consiste en une gorge, caractérisée en ce que le boîtier (36) est en tôle emboutie et en ce que l'évidement d'engagement est réalisé par emboutissage de la douille (1).

10. Butée de débrayage selon la revendication 9, caractérisée en ce que la portion de raccordement (2) du boîtier (36) est prolongée extérieurement par un bord tombé (3) se raccordant à une jupe (4), dont l'autre extrémité est déformée radialement vers l'intérieur pour fixation par sertissage de la bague externe du roulement à billes (5), ladite bague externe étant emprisonnée entre le bord tombé (3) et ladite extrémité déformée.

11. Butée de débrayage selon la revendication 7, caractérisée en ce que le roulement à billes (5) est du type standard.

12. Butée de débrayage selon la revendication 8 ou 9, caractérisée en ce que le boîtier (36) forme par lui-même la bague externe du roulement à billes (5).

## Claims

1. A clutch release bearing for a clutch of the pull-off type, especially for motor vehicles, comprising an annular housing (36) carrying an actuating element (1) for cooperation with a coupling assembly (12) which is part of a primary unit, and for constituting a clutch release bearing mounting, a ball bearing (5), the outer ring of which is fixed to the housing, a manoeuvring element (9) adapted to be subjected to the action of a control member and being part of a secondary unit, wherein locating means (6, 7, 80) are interposed between the inner ring of the ball bearing (5) and the manoeuvring element (9), so as to locate the said bearing axially on the manoeuvring element and to provide an axial coupling between the said bearing and the said manoeuvring element, going from the actuating element (1) to the manoeuvring element (9), characterised in that, in combination
(a) the housing (36), the ball bearing (5) and the manoeuvring element (9) of the clutch release bearing (10) are part of the secondary unit,
(b) the housing (36) of the clutch release bearing (10) is so configured as to define an actuating element (1) which is provided with an engagement recess (14'), for receiving a resiliently deformable coupling member (20) carried by a coupling piece (16) which is part of the coupling assembly (12),
(c) the manoeuvring element (9) is of generally tubular form.

2. A clutch release bearing according to Claim 1, characterised in that the manoeuvring element (9) consists generally of a sleeve carrying two shoulders (6, 80) which are offset axially with respect to each other for mounting the inner ring of the ball bearing (5).

3. A clutch release bearing according to Claim 2, characterised in that the said sleeve (9) defines a change in diameter so as to form one of the said shoulders (80), namely a first shoulder.

4. A clutch release bearing according to Claim 3, characterised in that the said locating means comprise an axially acting resilient means (7) which bears on the said first shoulder (80) so as to bias the inner ring of the bearing (5) towards the other shoulder (6), namely a second shoulder, carried by the said sleeve (9), and in that the inner ring of the ball bearing (5) is mounted radially, with a clearance, with respect to the said sleeve (9).

5. A clutch release bearing according to any one of Claims 2 to 4, characterised in that the sleeve (9) carries internally thereof a sleeve (33) for sliding movement.

6. A clutch release bearing according to any one of Claims 2 to 5, in which the housing (36) has a portion (4) fixed to the outer ring of the ball bearing (5) and extended towards the axis of the assembly by at least one junction portion, which is joined to a cylindrical portion (1) in the form of a spigot, characterised in that the housing (36) is so arranged that its junction portion (2) defines a space, with axial offset between the actuating element (1) and the said ball bearing (5), for accommodating the corresponding shoulder (6) carried by the sleeve (9) for mounting the inner ring of the ball bearing (5).

7. A clutch release bearing according to Claim 6, characterised in that the junction portion (2) is of sinuous shape and is inclined so that the said shoulder (6) can be fitted.

8. A clutch release bearing according to any one of Claims 1 to 7, in which the housing (36) has a portion (4) fixed to the outer ring of the ball bearing (5) and extended towards the axis of the assembly by means of at least one junction portion, which is joined to a cylindrical portion in the form of a spigot (1), characterised in that the said engagement recess (14') is formed in the said spigot (1), which is adapted to penetrate into the interior of the said coupling piece (16).

9. A clutch release bearing according to Claim 8, in which the engagement recess consists of a groove, characterised in that the housing (36) is of pressed sheet metal, and in that the engagement recess is formed by press forming of the spigot (1).

10. A clutch release bearing according to Claim 9, characterised in that the junction portion (2) of the housing (36) is extended outwardly by an upset edge (3) joined to a skirt (4), the other end of which is deformed radially inwardly for the fastening of the outer ring of the ball bearing (5) by seaming, the said outer ring being trapped between the upset edge (3) and the said deformed end.

11. A clutch release bearing according to Claim 7, characterised in that the ball bearing (5) is of the standard type.

12. A clutch release bearing according to Claim 8 or Claim 9, characterised in that the housing (36) constitutes by itself the outer ring of the ball bearing (5).

## Patentansprüche

1. Ausrücklager für eine gezogene Kupplung, insbesondere für Kraftfahrzeuge, bestehend aus einem ringförmigen Gehäuse (36) mit einem daran befindlichen Angriffselement (1) für das Zusammenwirken mit einer zu einem Primärblock gehörenden Anstelleinheit (12) und die Bildung einer Ausrücklagerbaugruppe, aus einem Kugellager (5), dessen Außenring fest mit dem Gehäuse verbunden ist, einem Betätigungselement (9), auf das ein Steuerorgan einwirken kann und das zu einem Sekundärblock gehört, wobei zwischen dem Innenring des Kugellagers (5) und dem Betätigungselement (9) Befestigungsmittel (6, 7, 80) eingesetzt werden, um das Kugellager axial an dem Betätigungselement zu befestigen und eine axiale Verbindung zwischen dem Kugellager und dem Betätigungselement herzustellen, die von dem Angriffselement (1) zu dem Betätigungselement (9) verläuft, in Verknüpfung der nachstehend genannten Merkmale **dadurchgekennzeichnet**, daß:
a) das Gehäuse (36), das Kugellager (5) und das Betätigungselement (9) des Ausrücklagers (10) zu dem Sekundärblock gehören,
b) das Gehäuse (36) des Ausrücklagers (10) so gestaltet ist, daß es ein Angriffselement (1) mit einer Eingriffsaussparung (14') für die Aufnahme eines elastisch verformbaren Kopplungsorgans (20) aufweist, das an einem Druckring (16) vorgesehen ist, der zu der Anstelleinheit (12) gehört,
c) das Betätigungselement (9) insgesamt rohrförmig ausgeführt ist.

2. Ausrücklager nach Anspruch 1, **dadurch gekennzeichnet,** daß das Betätigungselement (9) insgesamt aus einer Muffe besteht, an der zwei axial im Verhältnis zueinander versetzte Schultern (6, 80) für das Einsetzen des Innenrings des Kugellagers (5) vorgesehen sind.

3. Ausrücklager nach Anspruch 2, **dadurch gekennzeichnet,** daß die Muffe (9) eine Durchmesseränderung zur Ausbildung einer der genannten Schultern (80) aufweist, die als erste Schulter bezeichnet wird.

4. Ausrücklager nach Anspruch 3 , **dadurch gekennzeichnet,** daß die Befestigungsmittel ein axial wirksames elastisches Mittel (7) umfassen, das an der ersten Schulter (80) zur Auflage kommt, um den Innenring des Kugellagers (5) in Richtung der anderen Schulter (6) zu beanspruchen, die als zweite Schulter bezeichnet wird und an der Muffe (9) vorgesehen ist, und daß der Innenring des Kugellagers (5) radial mit Spiel im Verhältnis zu der Muffe (9) eingebaut ist.

5. Ausrücklager nach einem der Ansprüche 2 bis 4, **dadurch gekennzeichnet,** daß die Muffe (9) innen einen Gleitring (33) trägt.

6. Ausrücklager nach einem der Ansprüche 2 bis 5, bei dem das Gehäuse (36) einen fest mit Außenring des Kugellagers (5) verbundenen Abschnitt (4) aufweist, welcher zur Achse der Einheit durch mindestens einen Anschlußabschnitt verlängert wird, der sich an einen zylindrischen Abschnitt in Form einer Hülse (1) anschließt, **dadurch gekennzeichnet**, daß das Gehäuse (36) so gestaltet ist, daß sein Anschlußabschnitt (2) einen Freiraum mit axialem Versatz zwischen dem Angriffselement (1) und dem Kugellager (5) für die Aufnahme der betreffenden Schulter (6) schafft, die an der Muffe (9) vorgesehen ist, um den Innenring des Kugellagers (5) einzusetzen.

7. Ausrücklager nach Anspruch 6, **dadurch gekennzeichnet,** daß der Anschlußabschnitt (2) eine gewundene und geneigte Form für das Einsetzen der Schulter (6) aufweist.

8. Ausrücklager nach einem der Ansprüche 1 bis 7, bei dem das Gehäuse (36) einen fest mit dem Außenring des Kugellagers (5) verbundenen Abschnitt (4) aufweist, welcher zur Achse der Einheit durch mindestens einen Anschlußabschnitt verlängert wird, der sich an einen zylindrischen Abschnitt in Form einer Hülse (1) anschließt, **dadurch gekennzeichnet**, daß die Eingriffsaussparung (14') in der Hülse (1) vorgesehen ist, die in das Innere des Druckrings (16) eindringen kann.

9. Ausrücklager nach Anspruch 8, bei dem die Eingriffsaussparung in einer Rille besteht, **dadurch gekennzeichnet,** daß das Gehäuse (36) aus tiefgezogenem Blech besteht und daß die Eingriffsaussparung mittels Tiefziehen der Hülse (1) ausgeführt wird.

10. Ausrücklager nach Anspruch 9, **dadurchgekennzeichnet,** daß der Anschlußabschnitt (2) des Gehäuses (36) außen durch einen Saumstreifen (3) verlängert wird, der sich an einen Mantel (4) anschließt, dessen anderes Ende radial nach innen verformt ist, um den Außenring des Kugellagers (5) mittels Falzung zu befestigen, wobei dieser Außenring zwischen dem Saumstreifen (3) und dem verformten Ende gesichert ist.

11. Ausrücklager nach Anspruch 7, **dadurchgekennzeichnet,** daß es sich bei dem Kugellager (5) um eine standardmäßige Bauart handelt.

12. Ausrücklager nach Anspruch 8 oder 9, **dadurch gekennzeichnet,** daß das Gehäuse (36) selbst den Außenring des Kugellagers (5) bildet.
